# EUROPEAN PATENT APPLICATION

(11) **EP 2 163 805 A2**
(43) Date of publication of application: **17.03.2010**
(21) Application number: 09009286.7
(22) Date of filing: 16.07.2009
(51) Int. Cl.: F17C 1/00

(54) **Apparatus for gas storage**

(30) Priority: 11.09.2008 US 208915
(71) Applicant: C. En. Limited, 8032 Zürich (CH)
(72) Inventor: Zhevago, Nikolay, Moscow 121609 (RU); Denisov, Emil, Moscow 125130 (RU); Parnes, Zeev, Kfar-Baruch 30073 (IL)
(74) Representative: Becker Kurig Straus

(57) **Abstract**

An apparatus for gas storage is described. The apparatus contains a storage array structure including a gas storage portion tapered into at least one neck portion at one end of the structure. The storage array structure includes a plurality of tubular chambers for gas storage. At least a portion of an outer surface of the storage array structure is enveloped by at least one reinforcing layer for providing reinforcing strength thereto. The apparatus also includes at least one interface coupler mounted on the reinforcing layer at the neck portion. The interface coupler is configured for coupling the tubular chambers of the storage array structure to a gas pipe through which the gas can be supplied to the chambers of the array structure or discharged therefrom.

## Description

### FIELD OF THE INVENTION

The present invention relates generally to fuel storage, and in particular, to an apparatus for gas storage.

### BACKGROUND OF THE INVENTION

In recent times, there has been an increasing move towards powering cars and other vehicles with fuel cells running on gas. For example, fuel based on very efficient and clean-burning hydrogen is a highly attractive alternative to traditional gasoline fuel. Fuel cell-powered vehicles combining hydrogen with air to produce electricity to power the vehicles, have the potential to provide a solution to air quality problems. For example, when hydrogen is combined in a fuel cell with oxygen through combustion, or through a fuel cell mediated oxidation/reduction reactions, the primary product of this reaction is water, which is non-polluting and can be recycled to regenerate hydrogen and oxygen.

A key issue for operation of hydrogen fuel cells is the availability of hydrogen on-board a vehicle. Hydrogen can be provided either as a compressed gas, as a cryogenic liquid, or as an adsorbed element using metal hydride storage. Of these alternatives, compressed hydrogen is considered the best near-term solution for hydrogen storage on a motor vehicle due to the relative simplicity of gaseous hydrogen, rapid refueling capability, excellent dormancy characteristics, low infrastructure impact, and low development risk.

With increased fuel requirements, capacity of hydrogen-storage tanks becomes a highly important issue. Tank capacity is defined here as the maximum amount of the compressed hydrogen that can be stored within a storage tank at a certain pressure. To make the tanks applicable to vehicles, the hydrogen pressures have to be increased greatly, which results in increase in both the tank weight and the material cost.

Various high pressure tanks for storage of pressurized hydrogen are known in the art. For example, a hydrogen-storage container which demonstrates a high hydrogen-storage capacity, which is reduced in mass, and which is suited to be installed in an automobile is described in U.S. Patent Application No. 2005/145378 to Kimbara. The hydrogen-storage container holds a hydrogen-occlusion alloy in which hydrogen is occluded. An air gap portion formed in the container is filled with hydrogen gas whose pressure is above a plateau equilibrium pressure of hydrogen gas contained in the hydrogen-occlusion alloy at a temperature of a location where the hydrogen-storage apparatus is installed. This hydrogen-storage container has a liner made of metal or resin, and a fiber-reinforced resin layer provided outside the liner.

In order to reduce structural weight, storage tanks manufactured from fiber composite materials are known. An internal structure of such tanks can be made of stainless steel or aluminum and be enveloped with glass and/or carbon fibers. Tanks made of plastic materials are also known.

Hydrogen as the smallest element has a very high permeability rate through many materials. Hydrogen permeation leads also to another problem with hydrogen storage vessels. Hydrogen migration into the metal can cause reactions within the tank structure and result in hydrogen embrittlement due to which metal, from which the tank is formed, becomes brittle and crack. Hydrogen embrittlement leads to a serious reduction in ductility and then results in cracking and failures well below the normal yield stresses. High tensile strength, low density and nonreactivity with hydrogen along with low diffusivity are thus desired properties for hydrogen storage tanks. For example, carbon composites have high yield stresses and low densities, but they do not offer any solution to hydrogen leakage which results in capacity reduction during operation. Therefore hydrogen barrier coatings such as liners can be required for carbon composites to stop the hydrogen escaping and to keep the usable hydrogen capacity at hand. Liners are usually compounds such as aluminum and copper alloys or polymers, such as cross-linked polyethylene covered with a graphite fiber epoxy layer.

Further, in order to increase hydrogen storage capacity of the storage apparatus, the apparatus can comprise a number of gas storage tanks. For example, U.S. Pat. No. 7,112,239 to Kimbara et al. discloses a hydrogen storage apparatus including multiple gas storage tanks. The multiple gas storage tanks are disposed longitudinally parallel to each other in an ordered fashion such that roughly triangular prism-shaped empty spaces are formed between multiple adjacent hydrogen storage tanks. Coolant paths through which coolant flows, are formed in these roughly triangular prism-shaped empty spaces.

It is also known that hydrogen storage capacity of the storage apparatus can be increased by storing compressed hydrogen in microcapsules, such as hollow microspherical and/or microcylindrical (multi-capillary) assemblies. Such microcapsules can have high tensile strength, low density, nonreactivity with hydrogen along with low diffusivity and good conformity with fuel storage volumes available on a vehicle.

For example, U.S. Pat. No. 4,328,768 to Tracy et al. describes a fuel storage and delivery system wherein hollow microspheres filled with hydrogen gas are stored in a fuel storage chamber at pressures of 400 atmospheres. From the fuel storage chamber the microspheres are directed through a heated delivery chamber wherein hydrogen gas is freed by diffusion and delivered to an engine, after which the substantially emptied microspheres are delivered to a second storage chamber. The substantially emptied microspheres are removed by mechanical means, such as a pump, to a storage chamber from which they can be removed for refilling.

International Publication No. WO2005/028945A2 to Vik describes a storage apparatus for storing a highly pressurized gas such as hydrogen. The apparatus comprises an outer vessel (i.e., tank), a plurality of separately sealed inner vessels (i.e., microcapsules) and means for communication with the interiors of the inner vessels and of the outer vessel. The inner and outer vessels may be of any suitable shape. For example, the inner vessels are substantially spherical. Alternatively, the inner vessels are in the form of tubes which are preferably straight and parallel to one another. The inner vessels are made of carbon fiber reinforced epoxy.

International Publication No. WO2006/046248A1 to Chabak describes a hydrogen accumulation and storage material and a method of forming thereof. The material comprises a plurality of various-sized and at least partially permeable to hydrogen microspheres bound together to form a rigid structure in which a diameter of the microspheres is reduced from a center of the structure towards edges of the structure. An outer surface of the rigid structure can be enveloped by a sealing layer, thereby closing interspherical spaces.

International Publication No. WO2007/072470A1 to Gnedenko, et al. describes an apparatus for storage of compressed hydrogen gas. The apparatus includes a sealed housing that defines a chamber that includes a cartridge comprising a plurality of cylindrical voids containing the compressed hydrogen gas. The apparatus also includes a hydrogen liberating tool configured for controllable liberating the hydrogen gas from the cartridge into a volume of the chamber that is not occupied by the cartridge.

According to one embodiment described in WO2007/072470, the cartridge includes an assembly structure formed of a plurality of closely packed hollow microcylinders having sealed ends. In this case, the hydrogen discharging tool can include an electrically heating element, such as a wire woven within the cartridge in empty inter-cylinder spaces along the microcylinders, for discharging the hydrogen stored within the microcylinders into the inter-cylinder spaces and the other volume of the case that is not occupied by the microcylinders. Alternatively, the discharging tool can include a mechanical opener that is mounted on a shaft of an electric drive and configured for gradual destroying of the microcylinder ends proximal to the discharging tool.

According to another embodiment described in WO2007/072470, the cartridge includes a monolithic block having a plurality of cylindrical cavities. The ends of the cavities, proximate to the hydrogen discharging tool, are covered with a hydrogen diffuser plate. In this case, the hydrogen discharging tool includes a controllable radiation source for providing photo-enhanced diffusion of hydrogen through the hydrogen diffuser plate.

### GENERAL DESCRIPTION

Despite the known techniques in the area of fuel storage, there is still a need in the art for further improvement of the technique for accumulation and storage of hydrogen in order to provide a more effective hydrogen load and liberation, which will result in increased safety and cost-saving.

It would be useful to have an apparatus that can have a conformable structure and thus be provided in any suitable form, making it more suitable for industrial and/or private operation and transportation, when compared to the prior art techniques.

It would be also advantageous to have a method and apparatus that can feature higher gas-storage capacity and operate at higher weight content of the gas, and which will lower losses of the gas during its storage, resulting in increased safety and cost-saving, when compared to the prior art techniques.

The present invention partially eliminates disadvantages of the prior art techniques and describes a novel apparatus for storage and liberation of compressed hydrogen gas. The apparatus contains a storage array structure including a gas storage portion tapered into one or more neck portions at the ends of the structure. The storage array structure includes a plurality of tubular chambers for gas storage. At least a portion of an outer surface of the storage array structure is enveloped by at least one reinforcing layer for providing reinforcing strength thereto. The reinforcing layers can, for example, be made of carbon fiber reinforced epoxy.

The apparatus also includes one or more interface couplers mounted on the reinforcing layer at the neck portion. The interface coupler(s) can be configured for coupling the tubular chambers of the storage array structure to one or more gas pipes through which the gas can be supplied to the chambers of the array structure or discharged therefrom. The apparatus also includes one or more controllable gas valves coupled to the interface coupler. An ingress flow of the gas through the interface coupler provided for filling the storage array structure and an egress flow of the gas through the interface coupler provided for discharge of the gas can be both regulated by the controllable gas valve.

According to an embodiment of the present invention, at least part of the reinforcing layer is enveloped by a damping layer for protection of the apparatus from bumps.

According to an embodiment of the present invention, the apparatus can comprise at least one safety valve coupled to the tubular chambers of the structure and configured for automatic opening when pressure in the chambers reaches a dangerous level.

According to one embodiment, the storage array structure includes a plurality of closely packed hollow microtubes having ends on the opposite sides of the hollow microtubes. The ends of the microtubes on one side of the array structure are sealed, whereas the ends on the opposite side are coupled to the interface coupler, thereby defining the tubular chambers in the form of cavities in the structure in which the compressed hydrogen gas is stored.

The hollow microtubes can, for example, be made of a material having a ratio of the tensile strength to the density of the material greater than 1700 MPa·cm³/g. The external diameter of the hollow microtubes can decrease from the center of the structure towards the edges (periphery) of the structure. The wall thickness of the hollow microtubes may decrease from a center of the structure towards edges of the structure. Examples of the cross-sectional shape of the cavities in the structure include, but are not limited to, round shape, oval shape, polygonal shape, and D-shape. A ratio of the wall thickness of the microtubes to the external diameter of the microtubes can be in the range of 0.01 to 0.2. Examples of the materials from which the hollow microtubes can be made include, but are not limited to MgAlSi glasses, fused quartz and polymers.

According to another embodiment, the storage array structure includes a monolithic block having a plurality of cylindrical cavities formed therein which define the tubular chambers in the storage array structure.

According to still another embodiment, the storage array structure includes a plurality of closely packed hollow microtubes, as described above, and a monolithic block having a plurality of cylindrical cavities formed therein. The monolithic block can be aggregated together with said hollow microtubes.

According to a further embodiment of the present invention, the apparatus can further comprise a cooling system configured for cooling the storage array structure. For example, the cooling system can include a cooling chamber defining a cooling layer sandwiched between the outer surface of the storage array structure and the reinforcing layer. The cooling layer may surround at least a portion of the outer surface. The cooling chamber can be coupled to a coolant supply pipe, and equipped with a coolant valve mounted on the coolant supply pipe to open and close a path of coolant therethrough.

According to still another embodiment, the apparatus can further comprise a control system operatively coupled to the controllable gas valve and configured for controlling operation thereof.

According to one embodiment, the control system can include a pressure sensor arranged at the interface coupler. The pressure sensor can be configured for measuring gas pressure and producing a pressure sensor signal representative of the gas pressure within the tubular chambers of the array structure. The control system can also include a gas flow meter arranged at the interface coupler and configured for producing a gas flow sensor signal representative of gas flow within the interface coupler. The control system can include a controller operatively coupled to the pressure sensor and the flow meter. The controller can be responsive to the pressure sensor signal and the gas flow sensor signal and capable of generating control signals for controlling the operation of one or more controllable gas valves.

According to an embodiment of the invention, the control system can be further operatively coupled to the cooling system and configured for controlling operation thereof. For this purpose, the control system can, for example, further comprise a temperature sensor coupled to the outer surface of the array structure and configured for measuring the temperature. The temperature sensor can be configured for producing a temperature sensor signal indicative of the temperature of the outer surface. The controller can be operatively coupled to the temperature sensor and responsive to the temperature sensor signal for providing a control of said cooling system.

According to yet another embodiment of the invention, the control system can be configured for controlling operation of the safety valve.

The apparatus of the present invention has many of the advantages of the techniques mentioned theretofore, while simultaneously overcoming some of the disadvantages normally associated therewith.

The apparatus of the present invention is highly economical and operates with minimal losses of energy and gas.

The apparatus according to the present invention may be easily and efficiently fabricated and marketed.

The apparatus according to the present invention is of durable and reliable construction.

The apparatus according to the present invention may have a low manufacturing cost.

There has thus been outlined, rather broadly, the more important features of the invention so that the detailed description thereof that follows hereinafter may be better understood, and the present contribution to the art may be better appreciated. Additional details and advantages of the invention will be set forth in the detailed description.

### BRIEF DESCRIPTION OF THE DRAWINGS

In order to understand the invention and to see how it may be carried out in practice, embodiments will now be described, by way of non-limiting example only, with reference to the accompanying drawings, in which:
**Fig. 1** is a schematic fragmentary longitudinal cross-sectional view of an apparatus for gas storage, according to one embodiment of the present invention;
**Figs. 2A** through **2C** illustrate schematic transverse cross-sectional views of the apparatus of **Fig. 1** taken along the line A-A therein, according to several embodiments of the present invention;
**Fig. 3** is a schematic fragmentary longitudinal cross-sectional view of an apparatus for gas storage, according to another embodiment of the present invention;
**Fig. 4** is a schematic fragmentary longitudinal cross-sectional view of an apparatus for gas storage, according to a further embodiment of the present invention;
**Fig. 5** is a schematic fragmentary longitudinal cross-sectional view of an apparatus for gas storage, according to still a further embodiment of the present invention; and
**Fig. 6** is a schematic fragmentary longitudinal cross-sectional view of an apparatus for gas storage, according to yet another embodiment of the present invention.

### DETAILED DESCRIPTION OF EMBODIMENTS

The principles and operation of an apparatus for gas storage according to the present invention may be better understood with reference to the drawings and the accompanying description. It should be understood that these drawings are given for illustrative purposes only and are not meant to be limiting. It should be noted that the figures illustrating various examples of the apparatus of the present invention are not to scale, and are not in proportion, for purposes of clarity. It should be noted that the blocks as well other elements in these figures are intended as functional entities only, such that the functional relationships between the entities are shown, rather than any physical connections and/or physical relationships. The same reference numerals and alphabetic characters will be utilized for identifying those components which are common in the apparatus and its components shown in the drawings throughout the present description of the invention.

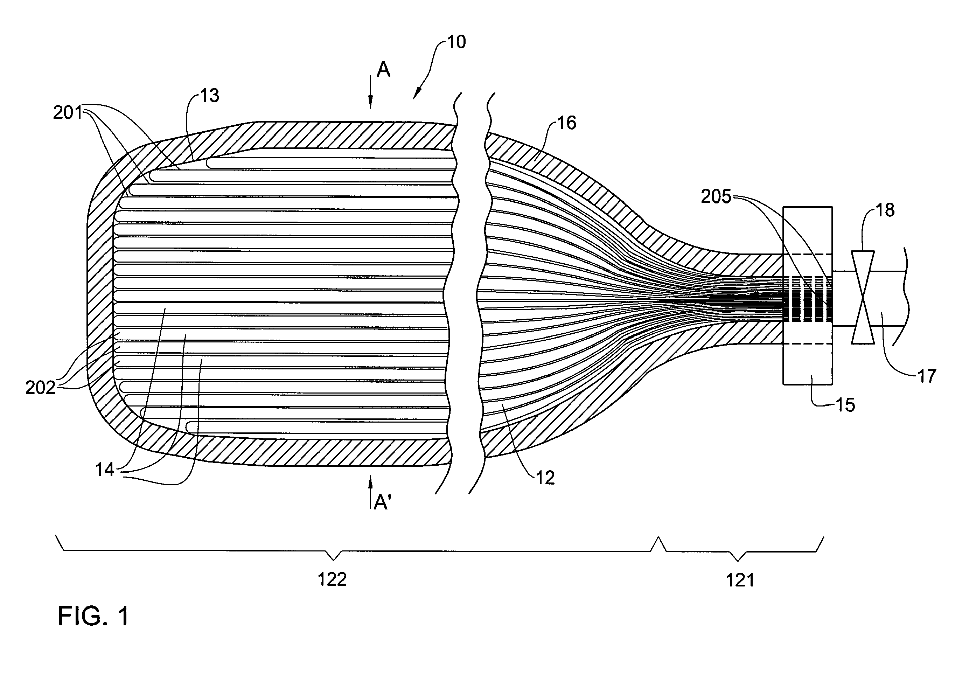

Referring to **Fig. 1****,** a schematic fragmentary longitudinal cross-sectional view of an apparatus **10** for storage of gases is illustrated, according to one embodiment of the present invention. It should be noted that utilization of the apparatus of the present invention is not limited by any specific gas and can, for example, be used for storage and discharge of hydrogen, methane, oxygen, etc. When desired, a mixture of various gases can also be employed.

The apparatus **10** includes a storage array structure **12** that is constituted of a gas storage portion **122** which is tapered into a neck portion **121** at one end of the structure. The storage array structure **12** contains a plurality of tubular chambers **14** in the form of cavities (voids) for gas storage. The term "structure" is broadly used herein to describe a plurality of vessels, cartridges, capillaries, blocks of porous materials or other gas storage cells, which are bound together, and include a plurality of voids (chambers) configured for storage of compressed gas. Various ways of organization of the tubular chambers in the structure **12** will be described hereinbelow.

An outer surface 13 of the storage array structure **12** or at least a portion thereof is enveloped by one or more reinforcing layers **16** (only one reinforcing layer is shown in **Fig. 1**) that provide reinforcing strength to the structure **12.** The reinforcing layer(s) **16** can have any desired thickness, shape and rigidity sufficient to provide a mechanical strength to the apparatus **10.** Generally, the reinforcing layer(s) **16** can be made of any suitable metal, plastic or composite materials. For example, the reinforcing layers **16** can be made of carbon fiber reinforced epoxy. The thickness of the reinforcing layer(s) **16** can, for example be in the range of about 1 millimeter at gas storage portion **122** to about 10 millimeters at the neck portion **121** of the structure.

The apparatus **10** also includes an interface coupler **15** mounted on the reinforcing layer **16** at the neck portion **121** of the structure. The interface coupler **15** can include any coupling device or system configured for coupling the tubular chambers **14** of the storage array structure **12** to a gas pipe **17** through which gas can be supplied to the chambers **14** of the structure **12** or discharged (liberated) therefrom. For example, the interface coupler **15** can include a flange that couples the tubular chambers **14** to the gas pipe **17.** In general, the interface coupler **15** can be constructed from any suitable metal, plastic or composite material and have shape and size suitable for the desired purpose.

The gas pipe **17** can further couple the array structure **12** either to a source of gas (not shown) in case of filling the gas storage apparatus **10,** or to any desired consumer system (not shown), e.g. a fuel cell of a vehicle, utilizing the gas stored in the apparatus **10.**

The flows (ingress flow and egress flow) of the gas through the gas pipe **17** can be regulated by a controllable gas valve **18** that can be aggregated with the interface coupler **15.** Alternatively, the controllable gas valve **18** can be arranged at any place along the length of the gas pipe **17.** The term "valve" as used herein has a broad meaning and relates to any electrical or mechanical device adapted for regulating the flow rate of the gas passing therethrough.

Specifically, in order to fill the structure **12** with gas or discharge the gas from the structure **12,** the controllable gas valve **18** should be opened to enable gas to flow into the chambers **14** of the storage structure **12** or out of them, respectively. After the filling or discharge of a desired amount of the gas, the gas flows are blocked by the corresponding operation of the controllable gas valve **18.**

When desired, the interface coupler **15** can be directly connected to the controllable gas valve **18** which in turn can be coupled to the gas pipe **17.**

According to one embodiment, the structure **12** includes a plurality of closely (densely) packed hollow microtubes (i.e., capillaries or microcylinders) **201** having ends **202** and **205** on opposite sides of the hollow microtubes **201.** The ends **202** of the microtubes **201** on one side of the array structure **12** can be sealed.

For example, the microtubes **201** can be capped or plugged on the ends **202** by semi-spheres with comparable wall thickness and featuring gas impermeability. Alternatively, the end **202** can be sealed by melting, brazing, soldering or any other method known in art.

The sealed microtubes **201** define the open chambers **14** in the form of cavities or voids in the structure **12** in which the compressed hydrogen gas can be trapped and stored. The opposite (i.e. unsealed) ends **205** of the microtubes **201** can be coupled to the interface coupler **15.** In order to couple the ends **205** of the microtubes **201** to the interface coupler **15,** a cross-sectional dimension of the microtubes **201** must gradually decrease from the gas storage portion **122** towards the neck portion **121.** The scaling factor (i.e., the ratio of a capillary dimension in the gas storage portion **122** of the apparatus **10** to the capillary dimension at the neck portion **121**) can be in the range of about 10 to about 100.

The hollow microtubes **201** can be made of a material that has relatively small gas permeability and high tensile strength σ at low density ρ. For example, the materials that meet the condition σ/ρ ≥ 1700 MPa·cm³/g are suitable for the microtubes **201.** Examples of the materials suitable for the microtubes **201** include, but are not limited to, MgAlSi glasses (e.g., S-2 Glass^{™}, R glass available from Saint-Gobain Vetrotex Textiles, T Glass available from Nitto Boseki Co., Ltd. (Nittobo)), fused quartz, polymers (e.g., Kevlar^{™}, Twaron^{™}), etc.

Generally, the hollow microtubes **201** can have any desired length. In turn, the external diameter *d* of the microtubes **201** can be in the range of about 1 micrometer to about 5 millimeters. Magnitudes of wall thickness h of the microtubes **201** are defined by the value of the ratio *hld*, that can be obtained from the equation *hld* = *pl*(2σ), where *p* is the pressure of the hydrogen stored in microtubes 201 and σ is the tensile strength of the microtube material. For example, the ratio of the wall thickness to the external diameter is in the range of about 0.01 to about 0.1, depending on *p* and σ.

It should be noted that the external diameter *d* and wall thickness *h* of the microtubes located in the inner layers (i.e., in the bulk) of the structure **12** and the peripheral microcylinders can be different. In particular, the external diameter of the microtubes **201** can decrease from a center of the assembly structure towards edges (periphery) of the structure. By placing larger microtubes inside the structure and smaller microtubes towards the edges, a hydrogen accumulation and storage structure is created in which the wall tensions decrease towards the circumference due to lower diameter of the microtubes. Accordingly, the wall thickness *h* of the microtubes can increase from the center of the assembly structure towards the edges of the structure **12.**

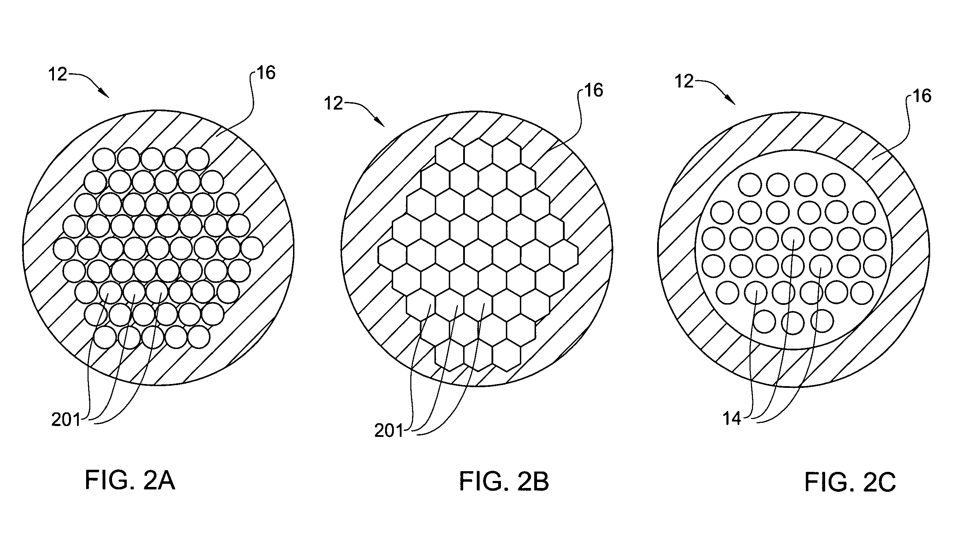

The microtubes **201** in the array structure **12** can have any desired shape in their cross-section. Examples of the cross-section shape of the microcylinders include, but are not limited to, round shape, oval shape, polygonal shape, hexagonal shape, D-shape, etc. **Figs. 2A** and **2B** illustrate examples of a schematic transverse cross-sectional view of the apparatus **10** of **Fig. 1** taken along the line A-A'. As shown, in **Figs. 2A** and **2B****,** the structure **12** has a plurality of the closely packed microtubes having round and hexagonal cross-sectional shape, correspondingly, which are enveloped by the reinforcing layer **16.** It should be understood that when the cross-section shape is hexagonal (see **Fig. 2B**), the closest packing of the microtubes **201** can be obtained.

Preferably, the microtubes **201** are closely (intimately) packed in the structure. In other words, there is no empty space between the microtubes available for hydrogen. However, if the neighboring microtubes **201** are separated from each other, the space between their walls should be filled with a material, e.g., epoxy, glass, etc.

According to one non-limiting example, the microtubes **201** are closely packed, but they are not bound together.

According to another non-limiting example, the microtubes **201** are bound together to form a rigid structure. In this case, the microtubes can, for example, be tied together with a fastener (not shown), e.g., girded with a fastening band. Likewise, when the microcylinders are made of glass, aramid or metal, they can be bound together, for example, by welding, brazing and/or sintering. Moreover, an adhesive material, e.g., epoxy adhesives, can also be used for binding the microcylinders together.

It should be understood that the microtubes **201** can be closely packed in any suitable assembly and the structure **12** can have any desired shape for providing a conformable configuration to the apparatus **10** and making it suitable for transportation and conformation to the space available in a vehicle.

Methods for fabrication of the microtubes and the microtubular arrays are known *per se*. In particular, various microtubular (capillary) arrays made from glass and/or plastics are widely used in x-ray optics and photonics. Generally, the process of fabrication of microtubular arrays is divided into three main stages: (i) drawing glass tubes with relatively large diameter, (ii) re-drawing them into a bunch of capillaries with smaller diameter, and (iii) sintering the capillaries into the array. In order to taper the microtubular arrays for forming the neck portion **121,** the bunch of capillaries can further be placed in a heated chamber or flame until the material of the capillaries softens, and thereafter can be drawn out as finely as desired.

The existing technology enables producing vast arrays with a microtube's diameter down to 1 micrometer or even less, and a wall thickness-to-diameter ratio less than 5%. For example, the arrays suitable for the purpose of the present invention can be obtained from Paradigm Optics, Inc.; 9600 NE 126th Ave, Suite 2540 Vancouver, WA 98682 USA; Joint Stock Company "Technology Equipment Glass Structures (TEGS)", Prospect Stroiteley 1-B, Saratov, Russia, 410044, etc.

According to some embodiments of the present invention, the structure **12** includes a monolithic block having a plurality of cylindrical cavities (voids) formed therein. The cavities in the monolithic block define the chambers **14.** According to this embodiment, the monolithic block can have any desired size and shape for providing a conformable configuration to the apparatus **10** and making it to be suitable for transportation and conformation to the space available in a vehicle.

Referring to **Fig. 2C****,** an example of a schematic transverse cross-sectional view of the apparatus **10** of **Fig. 1** taken along the line A-A therein is illustrated. According to this example, the structure **12** of the apparatus **10** includes a tubular monolithic block having a plurality of cylindrical cavities forming the chambers **14** having a round cross-section. A diameter of the cross-section of the cylindrical cavities can, for example, be in the range of about 1 micrometer to about 5 millimeters. The structure **12** is enveloped by a reinforcing layer **16.**

It should be understood that the cylindrical cavities forming the chambers **14** may have any desired shape, such as oval shape, polygonal shape, hexagonal shape, D-shape, etc. Moreover, the dimension of the cavities may have any desired size distribution.

According to one embodiment, a distance between the neighboring cavities **14** may depend on the diameter, the pressure of the gas stored in the structure **12** and the tensile strength of the block material. For example, the diameters of the cavities **14** located in the inner layers (i.e., in the bulk) and near the periphery of the array can be different. In particular, the diameters can be reduced from a center of the structure **12** towards the periphery of the structure. Forming larger cavities inside the structure and smaller cavities **14** at the periphery can lead to the storage structure in which the material tension decreases from the center towards the circumference. Likewise, the distance between the neighboring cavities can be increased from the center of the structure towards the periphery.

According to this embodiment, the structure **12** can be formed from a monolithic block made of glass and/or plastics in which a plurality of cylindrical cavities (voids) are formed, for example by drilling. Examples of materials suitable for the monolithic block include, but are not limited to, MgAlSi glasses (e.g., S-2 Glass^{™}, R glass available from Saint-Gobain Vetrotex Textiles, T Glass available from Nitto Boseki Co., Ltd. (Nittobo)), fused quartz, polymers (e.g., Kevlar^{™}, Twaron^{™}), etc. In order to form the neck portion **121,** the monolithic block having cylindrical cavities can be further placed in a heated chamber or flame until the material of the block softens and then is drawn out as finely as desired.

According to some embodiments of the invention, the structure **12** can include a monolithic block having the plurality of cylindrical cavities aggregated together with a plurality of hollow microtubes. According to an embodiment, the monolithic block can be placed in the bulk of the structure, and then wrapped with the microtubes mounted on the periphery of the structure. For example, the microtubes can be wound around the monolithic block. The rate between the volume occupied by the monolithic block and the microtubes can have a predetermined value in order to provide optimal storage capacity of the apparatus **10.**

According to another general aspect of the present invention, there is provided a method for filling the apparatus of the present invention with gas. According to an embodiment, the method comprises providing the apparatus **10** that includes the structure **12** containing a plurality of the tubular chambers **14** that is suitable for storage of gas. Further, the method includes providing a flow of gas in the pipe **17** into the tubular chambers **14** through the interface coupler **15.** As a result, the structure **12** can be filled with a predetermined amount of the gas. To provide the desired gas amount, when required, access of the gas into the structure **12** through the tube **17** can be blocked by the valve **18.**

According to a further general aspect of the present invention, there is provided a method for discharge (liberation) of the gas stored in the apparatus of the present invention. The method comprises providing the apparatus **10** that includes the structure **12** containing a plurality of the tubular chambers **14** that are filled with gas. Further, a controllable gas flow is provided to a consumer from the tubular chambers **14** of the structure **12** through the interface coupler **15** and through the pipe **17.** As a result, a predetermined amount of the gas can be liberated from the structure **12.**

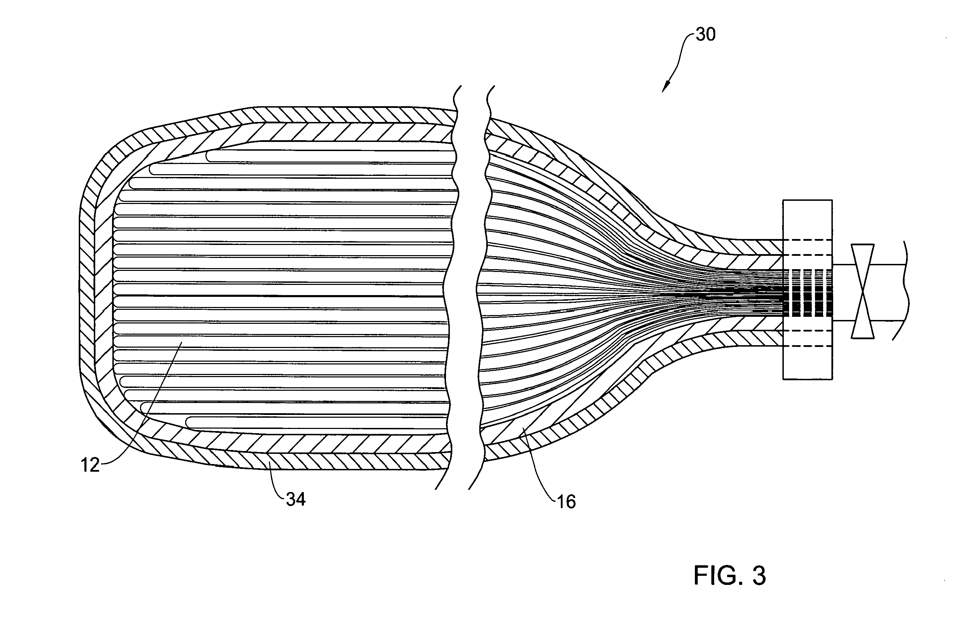

Referring to **Fig. 3****,** a schematic fragmentary longitudinal cross-sectional view of an apparatus **30** for gas storage is illustrated, according to another embodiment of the present invention. The apparatus **30** differs from the apparatus **(10** in **Fig. 1****)** in the fact that at least a portion of the reinforcing layer(s) **16** is covered by a damping layer **34** that provides protection of the apparatus **30** from bumps, for example, during transportation of the apparatus.

The damping layer **34** has any desired shape. Preferably, but not mandatory, the damping layer **34** replicates the shape of the reinforcing layer **16.** Generally, the damping layer **34** can be constructed of any suitable metal, plastic and/or composite materials, that have appropriate properties to provide damping. For example, the damping layer **34** can be made of a porous plastic and/or resin. The thickness of the damping layer **34** can be in the range of about 5 millimeters to about 20 millimeters. When desired, the damping layer **34** can be equipped with a carry handle (not shown) configured to facilitate a user to transport the apparatus **30.**

It should be understood from the gas laws that when gas is loaded into the chambers of the structure **12,** the temperature within the structure rises due to the compression of the gas. Accordingly, when the outer surface of the structure **12** or layers covering the structure are made of a material featuring a small heat conductance (e.g., a layer from carbon fiber reinforced epoxy), the heat generated within the apparatus will be "poorly" radiated to the exterior. The latter can overheat and damage the gas storage apparatus. Moreover, the raising of the temperature can sufficiently decrease an amount of gas that can be loaded into the structure. In order to avoid and/or alleviate these deficiencies, the gas storage apparatus can be equipped with a cooling system adapted for cooling the structure **12.**

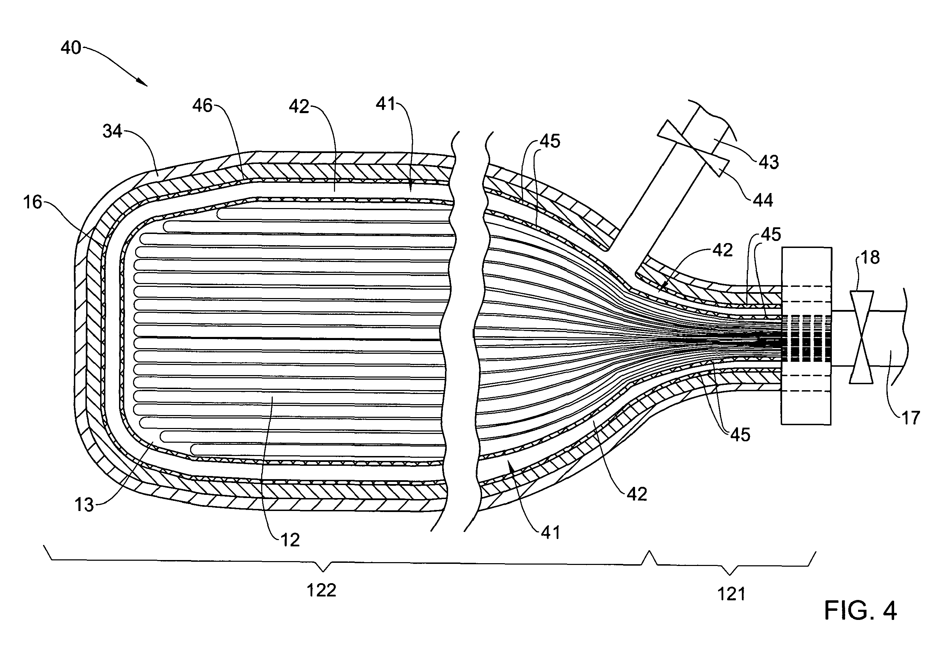

Referring to **Fig. 4****,** a schematic fragmentary longitudinal cross-sectional view of an apparatus **40** for gas storage is illustrated, according to a further embodiment of the present invention. Generally, the apparatus **40** can include all the components of the apparatus (**10** in **Fig. 1**) or the apparatus (**30** in **Fig. 3**), and further include a cooling system **42** configured for cooling the structure **12** to implement a cryo-compression technique of hydrogen storage.

According to the embodiment shown in **Fig. 4****,** the cooling system **41** includes a cooling chamber **42** surrounded with hollow walls **46,** in which the narrow region **45** between the inner and outer wall is evacuated of air. Using vacuum as an insulator avoids heat transfer to the structure by conduction or convection. The cooling chamber **42** with hollow walls **46** defines a cooling layer. The cooling layer can, for example, be constructed as two thin-walled vesseles nested one inside the other, and sealed together at their necks near or at the interface coupler **15.**

According to the embodiment shown in **Fig. 4****,** the cooling layer is sandwiched between the outer surface **13** of the storage array structure **12** and the reinforcing layer **16.** However, when desired, the hollow walls **46** themselves can function as the reinforcing layer similar to the walls of a doubled walled vessel (sometimes referred to as a Dewar flask, vacuum-insulated flask or thermos). Such a doubled walled vessel is, for example, described in U.S. Patent No. 872,795 to Burger, a disclosure of which is incorporated herein by reference.

The cooling layer can surround at least a portion of the outer surface **13.** The cooling chamber **42** is coupled to a coolant supply pipe **43** coupled to a source (not shown) of cooling fluid, and equipped with a coolant valve **44** mounted on the coolant supply pipe **43** to open and close a path of cooling fluid therethrough.

Examples of the cooling fluid include, but are not limited to cooled air and cooled liquid. Preferably, liquid nitrogen featuring extremely low temperatures (less than -196°C) can be utilized for filling the cooling chamber **42.** The deep cooling of the storage array structure **12** with liquid nitrogen can increase hydrogen density at a given ultimate pressure that the tank can withstand. It should also be understood that tensile strength of glass may increase at low temperatures.

According to one embodiment, liquid nitrogen can flow from a liquid nitrogen source (not shown) and enter cooling chamber **42** through the coolant supply pipe **43.** The flow of nitrogen through the coolant supply pipe **43** can be regulated by a controllable coolant valve **44.** When nitrogen is used as coolant, the coolant supply pipe **43** can also regulate the arising of pressure of nitrogen vapor inside the cooling chamber **42.**

The hollow walls **46** of the cooling chamber **42** can have any desired shape to provide effective cooling of the storage array structure **12.** Generally, the hollow walls **46** can be made from any suitable metal, plastic or composite materials, sufficient for holding the coolant and providing the most efficient cooling of the structure **12.** When liquid nitrogen is used as coolant, the thickness of the cooling layer defined by the cooling chamber **42** can be in the range of about 5 millimeters to about 50 millimeters.

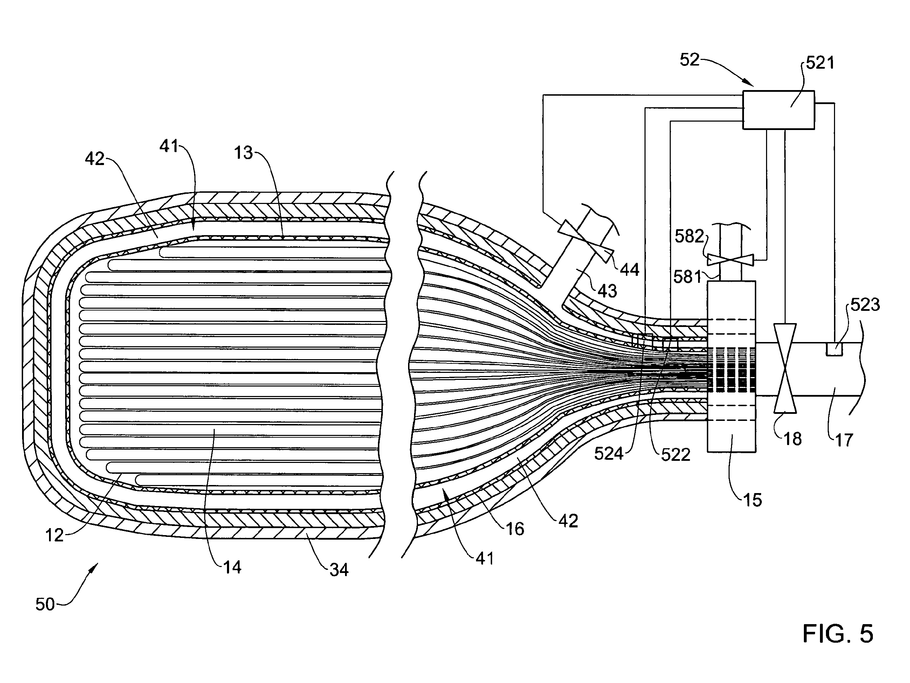

Referring to **Fig. 5****,** a schematic fragmentary longitudinal cross-sectional view of an apparatus **50** for gas storage is illustrated, according to still another embodiment of the present invention. Similar to the embodiments described above, the apparatus **50** includes the storage array structure **12,** the reinforcing layer(s) **16** enveloping the storage array structure **12,** the damping layer **34,** the interface coupler **15** coupling the voids (chambers) **14** of the structure to a source of gas or consumer system through the gas pipe **17** equipped with controllable gas valve **18.** When desired, the apparatus **50** can include the cooling system **41** adapted for cooling the structure **12.** The construction and function of all these elements are described above.

According to the embodiment shown in **Fig. 5****,** the apparatus **50** also includes a safety valve **582** that can be automatically open when gas pressure in the structure **12** reaches a dangerous level. As illustrated in **Fig. 5****,** the safety valve **582** can be arranged on a safety pipe **581** coupled to the chambers 14 and is adapted to regulate the gas flow through the safety pipe.

According to the embodiment shown in **Fig. 5****,** the apparatus **50** further includes a control system **52** that is coupled, *inter alia*, to the controllable gas valve **18** and configured for controlling operation thereof. When required, the control system **52** can be coupled to the cooling system **41** and/or the safety pressure valve **582.** Specifically, the control system **52** can be adjusted either automatically or manually to control operation of the controllable gas valve **18** and/or the safety pressure valve **582** to regulate the flow of the gas through the gas pipe **17** and the safety pipe **581,** respectively. Likewise, the control system **52** can be adjusted to control operation of the cooling system **41** by controllably regulating the operation the controllable coolant valve **44.**

The control system **52** includes a controller **521,** a pressure sensor **522** coupled to the controller **521** and a gas flow meter **523** coupled to the controller **521.** The controller **521** is an electronic device that can, *inter alia*, generate control signals to control operation of the controllable gas valve **18,** the safety pressure valve **582.**

The pressure sensor **522** can be arranged within the structure **12** and configured for measuring the gas pressure within the chambers (voids) **14,** and producing a pressure sensor signal indicative of this pressure. The gas flow meter **523** can be arranged within the interface coupler or within the gas pipe **17** in the vicinity of the controllable gas valve **18.** The gas flow meter is a device configured for measuring a rate of the gas flowing in the gas pipe **17,** and producing at least one gas flow meter signal indicative of the flow rate. The signals produced by the pressure sensor **522** and the gas flow meter **523** can be relayed to the controller **521** via a connecting wire or wirelessly. In response to these signals, the controller **521** generates corresponding control signals to control operation of the controllable gas valve **18** and, when required, to the safety pressure valve **582.**

As described above, the control system **52** can also be coupled to the cooling system **41** and configured for controlling operation thereof. In order to control the cooling system **41,** the control system **52** can comprise a temperature sensor **524** that is coupled to the outer surface **13** of the structure **12** and configured for measuring the temperature thereof. Accordingly, the temperature sensor **524** is configured for producing a temperature sensor signal indicative of the temperature and relaying it to the controller **521** via a connecting wire or wirelessly. In its turn, the controller **521** provides controlling signals to the controllable coolant valve **44** for its operation to vary the flow rate of coolant within the cooling chamber **42,** thereby to provide effective cooling of the structure **12** and to prevent its overheating and damage.

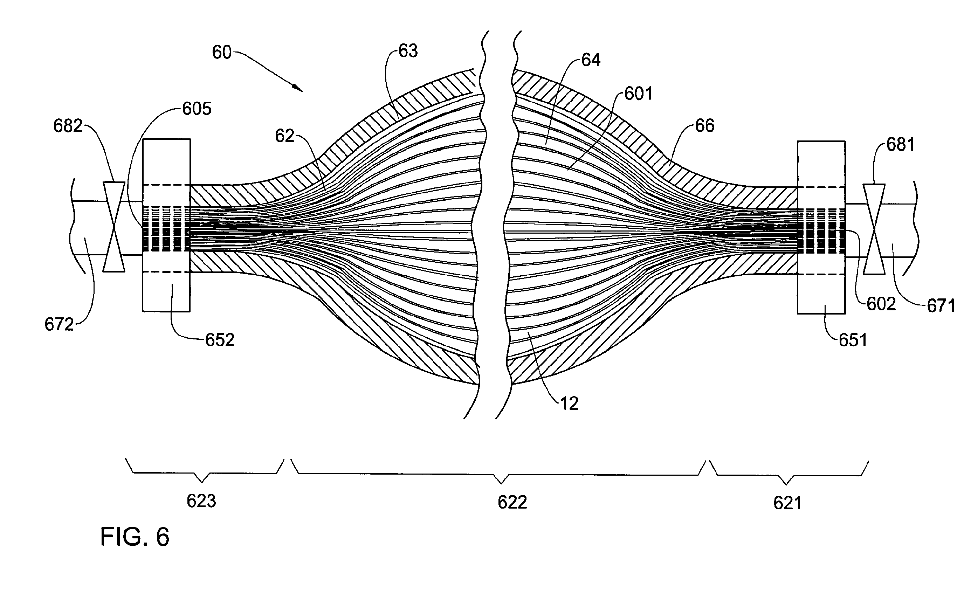

Referring to **Fig. 6****,** a schematic fragmentary longitudinal cross-sectional view of an apparatus **60** for storage of gases is illustrated, according to yet another embodiment of the present invention. Examples of the gases include, but are not limited to, hydrogen, methane, oxygen, and a combination thereof.

The apparatus **60** includes a storage array structure **62** that is configured and operated for gas storage. The storage array structure **62** is constituted of a gas storage portion **622** which is tapered into a first neck portion **621** at one end of the structure and into a second neck portion **623** at another end of the structure **62.** The storage array structure **62** contains a plurality of tubular chambers **64** in the form of cavities (voids) in which the compressed hydrogen gas can be trapped and stored.

An outer surface **63** of the storage array structure **62** or at least a portion thereof is enveloped by one or more reinforcing layers **66** (only one reinforcing layer is shown in **Fig. 6**) that provide reinforcing strength to the structure **62.** The reinforcing layer(s) **66** can have any desired thickness, shape and rigidity sufficient to provide a mechanical strength to the apparatus **60.** Generally, the reinforcing layer(s) **66** can be made of any suitable metal, plastic or composite materials. For example, the reinforcing layers **66** can be made of carbon fiber reinforced epoxy. The thickness of the reinforcing layer(s) **66** can, for example be in the range of about 1 millimeter to about 10 millimeters. When desired, the reinforcing layers **66** can be equipped with a carry handle (not shown) configured to facilitate a user to transport the apparatus **60.**

The apparatus **60** also includes an interface inlet coupler **651** mounted on the reinforcing layer **66** at the first neck portion **621** of the structure **62,** and an interface outlet coupler **652** mounted on the reinforcing layer **66** at the second neck portion **623** of the structure **62.** The interface inlet and outlet couplers **651** and **652** can include any coupling devices or systems configured for coupling the tubular chambers **64** of the structure **62** to a gas inlet pipe **671** and to a gas inlet pipe **672** through which gas can be supplied to or liberated from the chambers **64** of the storage array structure **62,** correspondingly. For example, the inlet and outlet interface couplers **651** and **652** can include corresponding flanges which couple the tubular chambers **64** to the gas inlet and outlet pipes **671** and **672.** The interface inlet and outlet couplers **651** and **652** can be constructed from any suitable metal, plastic or composite material and have shape and size suitable for the desired purposes.

The gas inlet pipe **671** can further couple the array structure **62** to a source of gas (not shown) for filling the gas storage apparatus **60.** Likewise, the gas outlet pipe **671** can further couple the array structure **62** to any desired consumer system (not shown), e.g. a fuel cell of a vehicle, utilizing the gas stored in the apparatus **60.**

The ingress flow of the gas through the gas inlet pipe **671** can be regulated by a controllable gas inlet valve **681** that can, for example, be integrated with the inlet couplers **651.** Alternatively, the controllable gas inlet valve **681** can be arranged within the gas pipe **671.** Likewise, the egress flow of the gas through the gas inlet pipe **671** can be regulated by a controllable gas inlet valve **681** that can either be integrated with the outlet coupler **652** or arranged within the gas pipe **671.** In order to fill the structure **62** with gas, the controllable gas valve **681** should be opened to enable gas to flow into the chambers **14** of the storage structure **62.** Likewise, in order to discharge the gas from the structure **62,** the controllable gas valve **682** should be opened to enable gas to flow from the chambers **64** of the storage structure **62.** After the filling or discharge of a desired amount of the gas, the gas ingress and egress flows are blocked by the corresponding operation of the controllable gas valves **681** and **682,** correspondingly.

According to one embodiment, the structure **62** can include a plurality of closely (densely) packed hollow microtubes (i.e., capillaries or microcylinders) **601** having ends **602** and **605** on opposite sides of the hollow microtubes **601.** The ends **602** of the microtubes **601** are coupled to the interface inlet coupler **651.** Likewise, the ends **605** of the microtubes **601** are coupled to the interface outlet coupler **652.**

Dimensions of the packed hollow microtubes **601,** their material, packing arrangement within the structure **62** and fabrication of the packed hollow microtubes **601** can be similar to the dimensions, material, packing arrangement and to the fabrication of the microtubes **201,** as described above with reference to **Fig. 1****.**

According to some embodiments of the present invention, the structure **62** can include a monolithic block having a plurality of cylindrical cavities (voids) formed therein. The cavities in the monolithic block form the chambers **64.** According to this embodiment, the monolithic block can have any desired size and shape for providing a conformable configuration to the apparatus **60** and making it suitable for transportation and conformation to the space available in a vehicle. The dimensions of the cylindrical cavities and their arrangement within the monolithic block forming the structure **64** can be similar to the dimensions and arrangement of the cylindrical cavities within the monolithic block forming the structure **12,** as described above with reference to **Fig. 1****.**

It should be understood that similar to the apparatus **30** shown in **Fig. 3****,** when desired, at least a portion of the reinforcing layer(s) **66** of the apparatus **60** can be covered by a damping layer (not shown) *mutatis mutandis*, that provides protection of the apparatus **60** from bumps, for example, during transportation of the apparatus.

Likewise, similar to the apparatus **40** shown in **Fig. 4****,** when desired, the apparatus **60** can also include a cooling system (not shown), *mutatis mutandis*, configured for cooling the structure **62.**

Further, similar to the apparatus **50** shown in **Fig. 5****,** when desired, the apparatus **60** can also includes one or more safety valves (not shown) coupled to the chambers **64** *mutatis mutandis*, that can be automatically open when gas pressure in the structure **62** reaches a dangerous level.

According to an embodiment, the apparatus **60** can further includes a control system *mutatis mutandis*, that can control, *inter alia*, operation of at least one device selected from the controllable gas inlet valve **681,** the controllable gas outlet valve **681,** the safety valve(s), and the cooling system. Operation of such a control system is similar to the operation of the control system **52,** as described above with reference to **Fig. 5****,** *mutatis mutandis*.

As such, those skilled in the art to which the present invention pertains, can appreciate that while the present invention has been described in terms of preferred embodiments, the conception, upon which this disclosure is based, may readily be utilized as a basis for the designing of other structures systems and processes for carrying out the several purposes of the present invention.

Also, it is to be understood that the phraseology and terminology employed herein are for the purpose of description and should not be regarded as limiting.

Finally, it should be noted that the word "comprising" as used throughout the appended claims is to be interpreted to mean "including but not limited to".

It is important, therefore, that the scope of the invention is not construed as being limited by the illustrative embodiments set forth herein. Other variations are possible within the scope of the present invention as defined in the appended claims. Other combinations and sub-combinations of features, functions, elements and/or properties may be claimed through amendment of the present claims or presentation of new claims in this or a related application. Such amended or new claims, whether they are directed to different combinations or directed to the same combinations, whether different, broader, narrower or equal in scope to the original claims, are also regarded as included within the subject matter of the present description.

## Claims

1. An apparatus for storage of a gas, comprising:
a storage array structure (12) including a gas storage portion (122) tapered into at least one neck portion (121) at one end of the structure (12); said storage array structure (12) including a plurality of tubular chambers (14) for gas storage;
at least one reinforcing layer (16) enveloping at least a portion of an outer surface (13) of the storage array structure (12) for providing reinforcing strength thereto; and
at least one interface coupler (15) mounted on the reinforcing layer (16) at said at least one neck portion (121) and configured for coupling the tubular chambers (14) of the storage array structure (12) to at least one gas pipe (17) through which the gas is supplied to the chambers (14) or discharged therefrom.

2. The apparatus of claim 1, wherein said storage array structure (12) includes a plurality of closely packed hollow microtubes (201) having ends (202 and 205) on the opposite sides of the hollow microtubes (201); the ends (202) of the microtubes on one side of the array structure (12) are sealed, whereas the ends (205) on the opposite side are coupled to the interface coupler (15), thereby defining said tubular chambers (14) in the form of cavities in the structure in which the compressed hydrogen gas are stored.

3. The apparatus of claim 2, wherein the hollow microtubes (201) are made of a material having a ratio of the tensile strength to the density of the material greater than 1700 MPa·cm³/g.

4. The apparatus of claim 2 wherein an external diameter of the hollow microtubes (201) and a wall thickness of the hollow microtubes (201) decrease from the center of the structure (12) towards the edges of the structure.

5. The apparatus of claim 2, wherein a cross-sectional shape of the tubular chambers (14) of the structure (12) is selected from round shape, oval shape, polygonal shape, and D-shape.

6. The apparatus of claim 2, wherein the hollow microtubes are made from materials selected from MgAlSi glasses, fused quartz and polymers.

7. The apparatus of claim 1 wherein said storage array structure (12) includes a monolithic block having a plurality of cylindrical cavities formed therein which define the tubular chambers (14) in said storage array structure (12).

8. The apparatus of claim 1, wherein the reinforcing layer (16) is made of carbon fiber reinforced epoxy.

9. The apparatus of claim 1, comprising at least one controllable gas valve (18) coupled to the interface coupler (15), said at least one controllable gas valve (18) is configured for regulating an ingress flow of the gas through said at least one interface coupler (15) for filling said storage array structure (12), and/or an egress flow of the gas through the interface coupler (15).

10. The apparatus of claim 1, wherein at least part of the reinforcing layer (16) is enveloped by a damping layer (34) for protection of the apparatus from bumps.

11. The apparatus of claim 1, further comprising a cooling system (41) configured for cooling said storage array structure, wherein the cooling system includes a cooling chamber (42) surrounded with hollow walls (46) defining a cooling layer surrounding at least a portion of the outer surface, the narrow region (45) between the inner and outer wall of the hollow walls (46) is evacuated of air.

12. The apparatus of claim 9, comprising a control system (52) operatively coupled to said controllable gas valve (18) and configured for controlling operation thereof.

13. The apparatus of claim 12, wherein said control system (52) comprises:
a pressure sensor (522) arranged at said at least one interface coupler (15) and configured for measuring gas pressure and producing a pressure sensor signal representative of the gas pressure within the tubular chambers (14) of the array structure (12),
a gas flow meter (523) arranged at said at least one interface coupler (15) and configured for producing a gas flow sensor signal representative of gas flow within the interface coupler (15), and
a controller (521) operatively coupled to said pressure sensor (522) and said flow meter (523), and being responsive to said pressure sensor signal and said gas flow sensor signal, said controller being capable of generating control signals for controlling the operation of said at least one controllable gas valve (18).

14. The apparatus of claim 18, further comprising a cooling system (41) configured for cooling said storage array structure (12); said control system (52) operatively further coupled to said cooling system (41) and configured for controlling operation thereof, thereby to avoid overheating and damage the structure.

15. The apparatus of claim 14, wherein said control system (52) further comprises a temperature sensor (524) coupled to the outer surface of the array structure (12) and configured for measuring the temperature and producing a temperature sensor signal indicative of the temperature of said outer surface, said controller (521) being operatively coupled to said temperature sensor (524) and responsive to said temperature sensor signal for providing control of said cooling system (41).
